# EUROPEAN PATENT APPLICATION

(11) **EP 4 485 657 A1**
(43) Date of publication of application: **01.01.2025**
(21) Application number: 22931459.6
(22) Date of filing: 18.03.2022
(51) Int. Cl.: H01M 50/30

(54) **BATTERY CELL AND MANUFACTURING METHOD AND MANUFACTURING APPARATUS THEREFOR, BATTERY, AND POWER CONSUMING APPARATUS**

(71) Applicant: Contemporary Amperex Technology Co., Limited, Jiaocheng District Ningde Fujian 352100 (CN)
(72) Inventor: CHEN, Xinxiang, Ningde, Fujian 352100 (CN); CHEN, Long, Ningde, Fujian 352100 (CN); LIN, Denghua, Ningde, Fujian 352100 (CN); HUANG, Shoujun, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2022/081788
(87) International publication number: WO 2023/173428

(57) **Abstract**

Some embodiments of this application provide a battery cell (20), a battery cell manufacturing method (300) and equipment (400), a battery (10), and an electrical device (1) to improve performance of a pressure relief mechanism (23) on the battery cell (20). The battery cell (20) includes: a housing (21); a plurality of electrode assemblies (22), accommodated in the housing (21); and a pressure relief mechanism (23), disposed on a first wall (213) of the housing (21) and located at a position on the first wall (213), where the position is opposite to a middle region between two adjacent electrode assemblies (22) among the plurality of electrode assemblies (22), and the pressure relief mechanism (23) is configured to release an internal pressure of the battery cell (20) when the internal pressure of the battery cell (20) exceeds a threshold.

## Description

### TECHNICAL FIELD

This application relates to the field of battery technology, and in particular, to a battery cell, a battery cell manufacturing method and equipment, a battery, and an electrical device.

### BACKGROUND

Due to advantages such as a small size, a high energy density, a long cycle life, and a long shelf life, lithium-ion battery are widely used in many fields such as electronic devices, electrical means of transport, and electrical toys. For example, the lithium-ion batteries are widely used in products such as a mobile phone, a laptop computer, an electric bicycle, an electric vehicle, an electric airplane, an electric ship, an electric toy car, an electric toy ship, an electric toy airplane, and an electric tool.

With ongoing development of lithium-ion battery technology, higher requirements are imposed on the safety performance of the lithium-ion batteries. A pressure relief mechanism on a lithium-ion battery plays an important role in the safety performance of the lithium-ion battery. For example, when a lithium-ion battery is short-circuited, overcharged, or abnormal, thermal runaway may occur inside the lithium-ion battery and cause the internal gas pressure to rise sharply. In this case, the internal gas pressure needs to be released outward by the pressure relief mechanism to prevent the lithium-ion battery from exploding. Therefore, the design of the pressure relief mechanism is of vital importance.

### SUMMARY

This application provides a battery cell, a battery cell manufacturing method and equipment, a battery, and an electrical device to improve performance of a pressure relief mechanism on the battery cell.

According to a first aspect, a battery cell is provided, including: a housing; a plurality of electrode assemblies, accommodated in the housing; and a pressure relief mechanism, disposed on a first wall of the housing and located at a position on the first wall, where the position is opposite to a region between two adjacent electrode assemblies among the plurality of electrode assemblies, and the pressure relief mechanism is configured to release an internal pressure of the battery cell when the internal pressure of the battery cell exceeds a threshold.

The battery cell in this application includes a plurality of electrode assemblies, and a pressure relief mechanism is disposed on the first wall of the housing. The pressure relief mechanism is configured to release the internal pressure of the battery cell when the internal pressure of the battery cell exceeds the threshold. The pressure relief mechanism is located at a position on the first wall, where the position is opposite to a region between two adjacent electrode assemblies among the plurality of electrode assemblies. In this way, when the internal pressure of the battery cell reaches the threshold, an internal pressure release path formed by the pressure relief mechanism is relatively short, thereby facilitating the release of the pressure and improving the safety of the battery cell.

In an embodiment, the battery cell is cuboidal. The pressure relief mechanism is located at a position on the first wall, and the position is opposite to a region between the two adjacent electrode assemblies arranged along a length direction of the battery cell.

In this embodiment, the battery cell may be cuboidal, and includes electrode assemblies arranged along the length direction. The housing of the battery cell is relatively long, thereby making it inconvenient to release the internal pressure of the battery cell. Therefore, the pressure relief mechanism is disposed at a position on the first wall, where the position is opposite to the region between two adjacent electrode assemblies arranged along the length direction of the battery cell. In this way, when the internal pressure of the battery cell exceeds a threshold, the pressure relief mechanism forms an effective path for releasing the internal pressure, thereby solving the problem of difficulty to release the internal pressure of a long battery cell.

In an embodiment, each of the electrode assemblies includes a first electrode plate and a second electrode plate, the first electrode plate and the second electrode plate are wound around a winding axis, and the winding axis is parallel to the length direction of the battery cell; or, each of the electrode assemblies includes a plurality of first electrode plates and a plurality of second electrode plates, the plurality of first electrode plates and the plurality of second electrode plates are stacked alternately along a second direction, and the second direction is perpendicular to the length direction; or, each of the electrode assemblies includes a first electrode plate and a plurality of second electrode plates, the first electrode plate includes a plurality of stacked sections and a plurality of bent sections, each bent section is configured to connect two adjacent stacked sections, the plurality of second electrode plates and the plurality of stacked sections are stacked alternately along a second direction, and the second direction is perpendicular to the length direction.

In this embodiment, the winding axis of the first electrode plate and the second electrode plate of the electrode assembly is parallel to the length direction of the battery cell, or the stacking direction of the first electrode plate and the second electrode plate of the electrode assembly is perpendicular to the length direction of the battery cell. Therefore, most of the gas generated by the electrode assembly is expelled from the end of the first electrode plate in the length direction and the end of the second electrode plate in the length direction. A gap for passing the gas is formed between the end of the first electrode plate along the length direction and the end of the second electrode plate along the length direction. The pressure relief mechanism is located at a position on the first wall, where the position is opposite to the region between the first electrode assembly and the second electrode assembly arranged along the length direction. When the internal pressure of the battery cell exceeds the threshold, the gas can pass through the gap and act on the pressure relief mechanism to actuate the pressure relief mechanism, so as to release the internal pressure.

In an embodiment, two tabs of the electrode assembly are disposed on a first end face of the electrode assembly. The first end face is perpendicular to the length direction of the battery cell. Among the two adjacent electrode assemblies, a tab of one electrode assembly and a tab of the other electrode assembly are oriented in opposite directions and both oriented outward from the battery cell.

In this embodiment, among the two adjacent electrode assemblies, the tab of one electrode assembly and the tab of the other electrode assembly may be located on the two end faces of the battery cell in the length direction respectively, thereby making it convenient to connect the tabs to the electrode terminals of the battery cell.

In an embodiment, the housing includes a first opening and a second opening opposite to each other along the length direction of the battery cell. The battery cell further includes a first end cap and a second end cap. The first end cap and the second end cap are configured to cover the first opening and the second opening respectively.

In this embodiment, the housing of the battery cell may include a first opening and a second opening opposite to each other along the length direction of the battery cell, and the battery cell further includes a first end cap and a second end cap that are configured to cover the first opening and the second opening respectively, thereby making it convenient to put the electrode assembly into the housing and simplifying the assembling process of the battery cell.

In an embodiment, the two adjacent electrode assemblies arranged along the length direction of the battery cell are insulated from each other. A positive electrode terminal and a negative electrode terminal of the battery cell are disposed on the first end cap, and configured to lead out electrical energy of one electrode assembly among the two adjacent electrode assemblies. A positive electrode terminal and a negative electrode terminal of the battery cell are disposed on the second end cap, and configured to lead out electrical energy of the other electrode assembly among the two adjacent electrode assemblies.

In this embodiment, the positive electrode terminal and the negative electrode terminal of the battery cell are disposed on both the first end cap and the second end cap. A pair of electrode terminals is disposed on both the first end cap and the second end cap, and the adjacent electrode assemblies arranged along the length direction of the battery cell are insulated from each other. Therefore, the two pairs of electrode terminals can conduct the current of different electrode assemblies respectively, thereby reducing the current flowing between the electrode assemblies, reducing the heat generated by the battery cell, and improving the charging and discharging performance of the battery cell.

In an embodiment, a thickness of the first wall is greater than a thickness of any other wall of the housing other than the first wall.

In this embodiment, among the walls of the housing, the first wall on which the pressure relief mechanism is disposed is thicker than other walls, thereby improving the welding reliability of the pressure relief mechanism, and making the first wall not prone to deform. In this way, the pressure relief mechanism is less affected by the creep caused by the internal pressure, and in turn, the burst pressure of the pressure relief mechanism is less affected by the creep. Therefore, the pressure relief mechanism can effectively release the internal pressure when the internal pressure is greater than the threshold. In addition, the decrease in the thickness of other walls also reduces the manufacturing cost of the housing.

In an embodiment, a thickness of the pressure relief mechanism at an effective position of the pressure relief mechanism is less than a thickness of the housing, and the effective position is a position to be burst open first on the pressure relief mechanism.

In this embodiment, the thickness of the pressure relief mechanism at the effective position is set to be less than the thickness of the housing. Therefore, when the internal pressure of the battery cell is greater than the threshold, the pressure relief mechanism can be burst open first, thereby providing an effective pressure relief path.

In an embodiment, the thickness of the pressure relief mechanism is greater than or equal to 0.01 mm and less than or equal to 0.5 mm.

When the thickness of the pressure relief mechanism is relatively large, the pressure relief mechanism may fail to be burst open first. When the thickness of the pressure relief mechanism is relatively small, the assembling difficulty is increased, and the pressure relief mechanism is prone to be damaged during the assembling. The thickness of the pressure relief mechanism needs to be set by considering the internal pressure of the battery cell, and usually needs to match the threshold and enable the pressure relief mechanism to be burst open first when the internal pressure of the battery cell exceeds the threshold. For example, the thickness of the pressure relief mechanism may be set to a value of 0.01 mm to 0.5 mm.

In an embodiment, a nick is created on the pressure relief mechanism, and the thickness of the pressure relief mechanism is a residual thickness of the nick.

In this embodiment, a nick is created on the pressure relief mechanism. When the internal pressure of the battery cell exceeds the threshold, the pressure relief mechanism is burst open first by means of the nick. The nick makes the manufacturing process simple, and achieves a good pressure relief effect. In this case, the thickness of the pressure relief mechanism is the residual thickness of the nick.

In an embodiment, a thickness of the first wall is greater than or equal to 0.2 mm and less than or equal to 3 mm.

A relatively large thickness of the first wall brings additional cost. A relatively small thickness of the first wall makes the burst pressure of the pressure relief mechanism be easily affected by the creep caused by the internal pressure of the battery cell. Therefore, the thickness of the first wall needs to set to a value within an appropriate range such as 0.2 mm to 3 mm.

In an embodiment, a thickness of any other wall of the housing other than the first wall is greater than or equal to 0.2 mm and less than or equal to 1 mm.

A relatively large thickness of other walls of the housing other than the first wall brings additional cost, and a relatively small thickness of other walls of the housing other than the first wall is unable to ensure a sufficient structural stability of the battery cell. Therefore, the thickness of other walls needs to be set to a value in an appropriate range such as 0.2 mm to 1 mm.

In an embodiment, the first wall is a bottom wall of the housing.

In this embodiment, the first wall on which the pressure relief mechanism is disposed is the bottom wall of the housing. In other words, the pressure relief mechanism faces downward. In this way, when the battery is mounted under the seat of a vehicle, the pressure relief mechanism can be kept away from passengers. Therefore, the internal pressure of the battery cell is released downward, thereby reducing the risk of injury to the passengers.

According to a second aspect, a battery is provided, including a plurality of battery cells disclosed in the first aspect or any embodiment of the first aspect. The battery cell is configured to provide electrical energy.

According to a third aspect, an electrical device is provided, including a plurality of battery cells disclosed in the first aspect or any embodiment of the first aspect. The battery cell is configured to provide electrical energy.

According to a fourth aspect, a battery cell manufacturing method is provided, including: providing a housing and a plurality of electrode assemblies, where a pressure relief mechanism is disposed on a first wall of the housing, and the pressure relief mechanism is configured to release an internal pressure of the battery cell when the internal pressure of the battery cell exceeds a threshold; and letting the plurality of electrode assemblies be accommodated in the housing so that the pressure relief mechanism is located at a position on the first wall, where the position is opposite to a region between two adjacent electrode assemblies among the plurality of electrode assemblies.

According to a fifth aspect, a piece of battery cell manufacturing equipment is provided, including: a providing module, configured to provide a housing and a plurality of electrode assemblies, where a pressure relief mechanism is disposed on a first wall of the housing, and the pressure relief mechanism is configured to release an internal pressure of the battery cell when the internal pressure of the battery cell exceeds a threshold; and an assembling module, configured to let the plurality of electrode assemblies be accommodated in the housing so that the pressure relief mechanism is located at a position on the first wall, where the position is opposite to a region between two adjacent electrode assemblies among the plurality of electrode assemblies.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a vehicle according to an embodiment of this application;
FIG. 2 is a schematic structural diagram of a battery according to an embodiment of this application;
FIG. 3 is a schematic structural diagram of a battery cell according to an embodiment of this application;
FIG. 4 is a schematic diagram of an internal pressure release path of the battery cell shown in FIG. 3;
FIG. 5 is a schematic exploded view of the battery cell shown in FIG. 3 and FIG. 4;
FIG. 6 is a schematic structural diagram of an electrode assembly according to an embodiment of this application;
FIG. 7 is a schematic structural diagram of another electrode assembly according to an embodiment of this application;
FIG. 8 is a schematic structural diagram of still another electrode assembly according to an embodiment of this application;
FIG. 9 is a schematic structural diagram of a battery cell according to an embodiment of this application;
FIG. 10 is a schematic diagram of a first wall of a battery cell according to an embodiment of this application;
FIG. 11 is a cross-sectional view of the battery cell shown in FIG. 10 and sectioned along an A-A direction;
FIG 12 is a close-up view of a local region B in the battery cell shown in FIG. 11;
FIG. 13 is a schematic flowchart of a battery cell manufacturing method according to an embodiment of this application; and
FIG. 14 is a schematic block diagram of battery cell manufacturing equipment according to an embodiment of this application.

The drawings are not drawn to scale.

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of this application, unless otherwise specified, "a plurality of means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction or constructed or operated in the specified direction. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

The directional terms appearing in the following description indicate the directions shown in the drawings, but are not intended to limit specific structures in this application. In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

In embodiments of this application, the same reference numeral denotes the same component. For brevity, detailed descriptions of the same component are omitted in a different embodiment. Understandably, dimensions such as thickness, length, and width of various components in the embodiments of this application shown in the drawings, and dimensions such as overall thickness, length, and width of an integrated device are merely illustrative descriptions, but do not constitute any limitation on this application.

In this application, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as cylindrical, flat, cuboidal or other shapes. The embodiments of this application do not limit the shape of the battery cell. In terms of the packaging form, the battery cell is typically classed into three types: cylindrical battery cell, prismatic battery cell, and pouch-type battery cell. The type of the battery cell is not limited herein.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

A battery cell includes an electrode assembly and an electrolyte solution. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part, uncoated with the positive active material layer, of the positive current collector, serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the negative current collector, a part uncoated with the negative active material layer protrudes from a part coated with the negative active material layer, and the part uncoated with the negative active material layer serves as a negative tab. The negative current collector may be made of copper, and a negative active material may be carbon, silicon, or the like. In order to ensure passage of a large current without fusing off, the number of positive tabs is plural, and the plurality of positive tabs are stacked together; and the number of negative tabs is plural, and the plurality of negative tabs are stacked together. The separator may be made of a material such as polypropylene (polypropylene, PP) or polyethylene (polyethylene, PE).

A pressure relief structure may be disposed on the battery cell. The pressure relief structure is configured to release an internal pressure of the battery cell when the internal pressure of the battery cell reaches a threshold. When the internal pressure of the battery cell reaches the threshold, an internal pressure release path can be formed by the pressure relief mechanism. With the change in the number of electrode assemblies in the battery cell, the pressure relief path inside the battery cell becomes longer, thereby directly impairing the pressure relief effect.

To solve such a problem, an embodiment of this application provides a battery cell. The battery cell includes a plurality of electrode assemblies. A pressure relief mechanism is disposed on a first wall of a housing of the battery cell. The pressure relief mechanism is located at a position on the first wall, where the position is opposite to a region between two adjacent electrode assemblies among the plurality of electrode assemblies. In this way, when the internal pressure of the battery cell reaches the threshold, an internal pressure release path formed by the pressure relief mechanism is relatively short, thereby facilitating the release of the pressure and improving the safety of the battery cell.

The technical solutions described in this embodiment of this application are applicable to various electrical devices that use a battery.

The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in this embodiment of this application.

For ease of description in the following embodiments, a vehicle is used as an example of the electrical device.

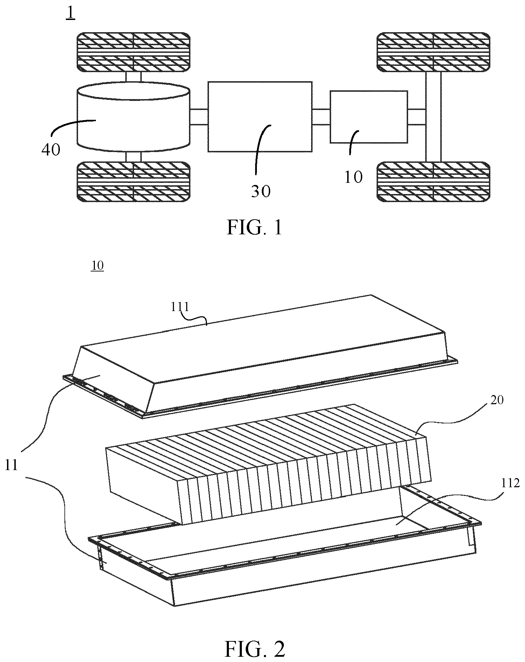

For example, as shown in FIG. 1, which is a schematic structural diagram of a vehicle 1 according to an embodiment of this application, the vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A motor 40, a controller 30, and a battery 10 may be disposed inside the vehicle 1. The controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may serve as an operating power supply of the vehicle 1 to power a circuit system of the vehicle 1. For example, the battery may be configured to meet operating power usage requirements of the vehicle 1 that is being started or navigated or running. In another embodiment of this application, the battery 10 serves not only as an operating power supply of the vehicle 1, but may also serve as a driving power supply of the vehicle 1 to provide driving power for the vehicle 1 in place of or partly in place of fuel oil or natural gas. The battery 10 may also be referred to as a battery pack.

To meet different power requirements, the battery 10 may include a plurality of battery cells 20. The plurality of battery cells 20 may be connected in series, parallel, or series-and-parallel pattern. The series-and-parallel pattern means a combination of series connection and parallel connection.

For example, FIG. 2 is a schematic structural diagram of a battery 10 according to an embodiment of this application. The battery 10 may include a plurality of battery cells 20. The battery 10 may further include a box 11. The interior of the box 11 is a hollow structure. A plurality of battery cells 20 are accommodated in the box 11. FIG. 2 shows a possible implementation of a box 11 according to an embodiment of this application. As shown in FIG. 2, the box 11 may include two parts, herein referred to as a first box portion 111 and a second box portion 112 respectively. The first box portion 111 and the second box portion 112 are snap-fitted together. The shapes of the first box portion 111 and the second box portion 112 may depend on the shape of the plurality of battery cells 20 combined. An opening is created on at least one of the first box portion 111 or the second box portion 112. For example, as shown in FIG. 2, both the first box portion 111 and the second box portion 112 each may be a hollow cuboid, and each may include only one opening surface. The opening of the first box portion 111 is opposite to the opening of the second box portion 112. The first box portion 111 and the second box portion 112 are snap-fitted together to form a box 11 that includes a closed cavity.

For another example, different from what is shown in FIG. 2, of the first box portion 111 and the second box portion 112, only one is a hollow cuboid with an opening, and the other assumes a plate shape to cover the opening. For example, the second box portion 112 is a hollow cuboid with one opening surface, and the first box portion 111 assumes a plate shape. In this case, the first box portion 111 fits and covers the opening of the second box portion 112 to form a box 11 with a closed cavity. The cavity may be configured to accommodate a plurality of battery cells 20. The plurality of battery cells 20 are combined and connected in parallel, series, or series-and-parallel pattern, and then placed into the box 11 that is formed by snap-fitting the first part 111 and the second part 112 together.

In some embodiments, the battery 10 may further include other structures, details of which are omitted here. For example, the battery 10 may further include a busbar component. The busbar component is configured to implement electrical connection between the plurality of battery cells 20, such as parallel connection, series connection, or series-parallel connection. Specifically, the busbar component may implement the electrical connection between the battery cells 20 by connecting electrode terminals of the battery cells 20. Further, the busbar component may be fixed to the electrode terminals of the battery cells 20 by welding. Electrical energy of the plurality of battery cells 20 may be further led out by a conductive mechanism running through the box 11.

Depending on the required power, the number of battery cells 20 in a battery 10 may be set to any value. A plurality of battery cells 20 may be connected in series, parallel, or series-and-parallel pattern to achieve a relatively high capacity or power. Each battery 10 may include a relatively large number of battery cells 20. Therefore, in order to facilitate mounting, the battery cells 20 may be arranged in groups. Each group of battery cells 20 forms a battery module 200. The number of battery cells 20 included in the battery module 200 is not limited, and may be set as required. In other words, the plurality of battery cells 20 may directly form the battery 10, or form the battery modules that are then used to form the battery 10.

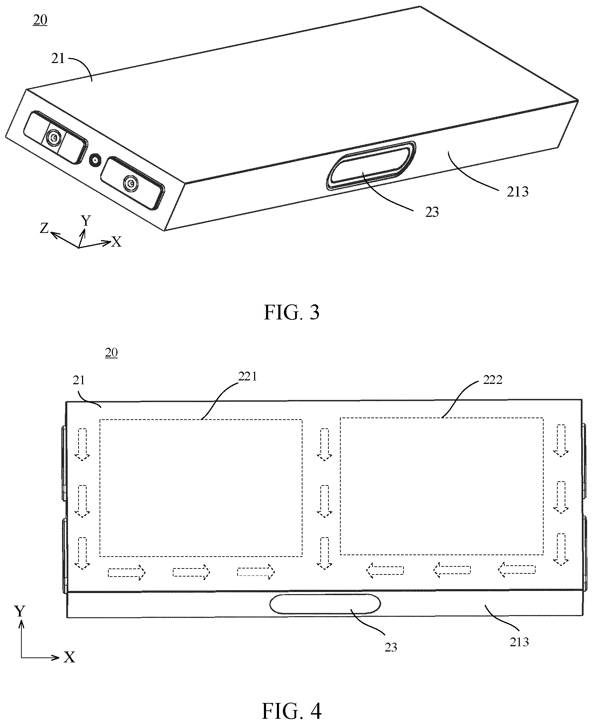

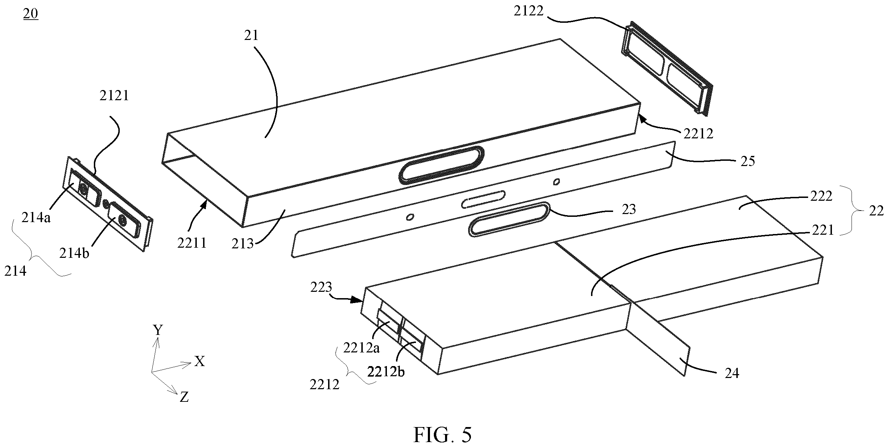

FIG. 3 to FIG. 5 show a battery cell 20 according to an embodiment of this application. FIG. 4 is a schematic diagram of an internal pressure release path of the battery cell 20 shown in FIG. 3; and FIG. 5 is a schematic exploded view of the battery cell 20 shown in FIG. 3 and FIG. 4.

As shown in FIG. 3 and FIG. 5, the battery cell 20 according to an embodiment of this application includes a housing 21, a plurality of electrode assemblies 22, and a pressure relief mechanism 23. The plurality of electrode assemblies 22 are accommodated in the housing 21. The pressure relief mechanism 23 is disposed on a first wall 213 of the housing 21 and located at a position on the first wall 213, where the position is opposite to a region between two adjacent electrode assemblies 22 among the plurality of electrode assemblies 22. The pressure relief mechanism 23 is configured to release an internal pressure of the battery cell 20 when the internal pressure of the battery cell 20 exceeds a threshold.

The number of electrode assemblies 22 included in a battery cell 20 is not particularly limited in an embodiment of in this application. For example, the battery cell 20 may include two electrode assemblies 22. In this case, the two electrode assemblies 22 may be arranged along the length direction X of the battery cell 20. For another example, the battery cell 20 may include a plurality of pairs of electrode assemblies 22, and the plurality of pairs of electrode assemblies 22 may be arranged along a thickness direction Y of the battery cell 20. Each pair of the electrode assemblies 22 includes two electrode assemblies 22 arranged along the length direction X of the battery cell 20. For another example, the battery cell 20 may include more than two electrode assemblies 22, and the electrode assemblies 22 are arranged along the length direction X of the battery cell 20.

The battery cell 20 in an embodiment of this application is described below by using an example in which the battery cell 20 includes two electrode assemblies 22 and the two electrode assemblies 22 are arranged along the length direction X of the battery cell 20.

When the battery cell 20 is thermally runaway, the internal pressure of the battery cell exceeds a threshold, and the pressure relief mechanism 23 can be actuated when the internal pressure of the battery cell reaches the threshold, so as to form an internal pressure release path to release the internal pressure, reduce the risk of explosion of the battery cell 20, and improve the safety of the battery cell 20.

For the battery cell 20 in this embodiment of this application, for example, as shown in FIG. 3 to FIG. 5, the pressure relief mechanism 23 may be disposed at a position on the first wall 213, where the position is opposite to a region between the first electrode assembly 221 and the second electrode assembly 222 arranged along the length direction X. The arrow in FIG. 4 indicates the pressure release path. When the internal pressure of the battery cell 20 is greater than the threshold, the pressure relief mechanism 23 is actuated, and the internal pressure is released outward from the battery cell 20 along the arrow direction to implement quick pressure relief. The two rectangular dashed line boxes in FIG. 4 represent the first electrode assembly 221 and the second electrode assembly 222 respectively.

The term "actuate" mentioned above means that the pressure relief mechanism 23 performs an action to release the internal pressure of the battery cell 20. The action performed by the pressure relief mechanism 23 includes, but is not limited to rupturing, melting, or splitting at least a part of the pressure relief mechanism 23, and the like. When the pressure relief mechanism 23 is actuated, the internal pressure of the battery cell 20 is released from the actuated part of the pressure relief mechanism 23, and may carry high-temperature and high-pressure emissions such as electrolyte solution, fragments of dissolved or split positive and negative plates or separator, and high-temperature and high-pressure gases or flames generated by reactions.

The shape of the battery cell 20 is not limited in this embodiment of this application. For example, the battery cell 20 may be cuboidal, and includes electrode assemblies 22 arranged along the length direction X.

When the battery cell 20 is cuboidal, the housing 21 of the battery cell 20 is relatively long, thereby being unfavorable to release of the internal pressure of the battery cell 20. Therefore, in an embodiment, the pressure relief mechanism 23 is located at a position on the first wall 213 of the housing 21, where the position is opposite to the region between two adjacent electrode assemblies arranged along the length direction X of the battery cell 20. In this way, when the internal pressure of the battery cell 20 exceeds a threshold, the pressure relief mechanism 23 forms an effective path for releasing the internal pressure, thereby solving the problem of difficulty to release the internal pressure of a long battery cell.

For example, as shown in FIG. 3 to FIG. 5, the battery cell 20 is cuboidal, and includes a first electrode assembly 221 and a second electrode assembly 222. The first electrode assembly 221 and the second electrode assembly 222 are arranged along the length direction X of the battery cell 20. The pressure relief mechanism 23 is located at a position on the first wall 213, where the position is opposite to a region between the first electrode assembly 221 and the second electrode assembly 222 arranged along the length direction X.

In an embodiment, an insulation strip 24 is disposed between the two adjacent electrode assemblies 22. For example, as shown in FIG. 5, an insulation strip 24 is disposed between the first electrode assembly 221 and the second electrode assembly 222 to reduce the possibility of contact between the first electrode assembly 221 and the second electrode assembly 222, reduce the risk of a short circuit, and improve the safety of the battery cell 20.

In an embodiment, two tabs of the electrode assembly 22 are disposed on a first end face 223 of the electrode assembly 22. The first end face 223 is perpendicular to the length direction X of the battery cell 20. Among the two adjacent electrode assemblies 22, a tab of one electrode assembly and a tab of the other electrode assembly are oriented in opposite directions and both oriented outward from the battery cell 20.

For example, for the first electrode assembly 221 shown in FIG. 5, the tabs 2212 of the first electrode assembly 221 are disposed on the first end face 223 of the first electrode assembly 221. The first end face 223 is perpendicular to the length direction X and oriented outward from the battery cell 20. The tabs 2212 include a first tab 2212a and a second tab 2212b. Of the first tab 2212a and the second tab 2212b, one is a positive tab, and the other is a negative tab. Similarly, for the second electrode assembly 222, the tabs of the second electrode assembly 222 are disposed on an end face of the second electrode assembly 222 and oriented outward from the battery cell 20, the end face being perpendicular to the length direction X. For brevity, details are omitted here.

Evidently, among the two adjacent electrode assemblies 22, the tab of one electrode assembly and the tab of the other electrode assembly are located on the two end faces of the battery cell 20 in the length direction X respectively, thereby making it convenient to connect the tabs to the electrode terminals 214 of the battery cell 20.

In an embodiment, as shown in FIG. 5, the housing 21 includes a first opening 2211 and a second opening 2212 opposite to each other along the length direction X of the battery cell 20. The battery cell 20 further includes a first end cap 2121 and a second end cap 2122. The first end cap 2121 and the second end cap 2122 are configured to cover the first opening 2211 and the second opening 2212 respectively.

The housing 21 of the battery cell 20 includes a first opening 2211 and a second opening 2212 opposite to each other along the length direction X of the battery cell 20, and the battery cell 20 further includes a first end cap 2121 and a second end cap 2122 that are configured to cover the first opening 2211 and the second opening 2212 respectively, thereby making it convenient to put the electrode assembly 22 into the housing and simplifying the assembling process of the battery cell 20.

In an embodiment, the two adjacent electrode assemblies 22 arranged along the length direction X of the battery cell 20 are insulated from each other. A positive electrode terminal and a negative electrode terminal of the battery cell 20 are disposed on the first end cap 2121, and configured to lead out electrical energy of one electrode assembly 22 among the two adjacent electrode assemblies 22. A positive electrode terminal and a negative electrode terminal of the battery cell 20 are disposed on the second end cap 2122, and configured to lead out electrical energy of the other electrode assembly 22 among the two adjacent electrode assemblies 22.

The positive electrode terminal and the negative electrode terminal of the battery cell 20 are disposed on both the first end cap 2121 and the second end cap 2122. That is, a pair of electrode terminals is disposed on both the first end cap 2121 and the second end cap 2122, and the adjacent electrode assemblies 22 arranged along the length direction X of the battery cell 20 are insulated from each other. Therefore, the two pairs of electrode terminals can conduct the current of different electrode assemblies 22 respectively, thereby reducing the current flowing between the electrode assemblies 22, reducing the heat generated by the battery cell, and improving the charging and discharging performance of the battery cell 20.

For example, as shown in FIG. 5, a pair of electrode terminals 214 of the battery cell 20 is disposed on the first end cap 2121, and includes a first electrode terminal 214a and a second electrode terminal 214b. Similarly, a pair of electrode terminals 214 of the battery cell 20 is also disposed on the second end cap 2122, and includes a first electrode terminal 214a and a second electrode terminal 214b. For brevity, the electrode terminals 214 on the second end cap 2122 are not shown in FIG. 5. Of the first electrode terminal 214a and the second electrode terminal 214b, one is a positive electrode terminal, and the other is a negative electrode terminal. The electrode terminal 214 on the first end cap 2121 and the electrode terminal 214 on the second end cap 2122 can conduct the current of the first electrode assembly 221 and the second electrode assembly 222 respectively, so as to reduce the current flowing between the first electrode assembly 221 and the second electrode assembly 222, reduce the heat generated by the battery cell 20, and improve the charging and discharging performance of the battery cell 20.

In an embodiment, as shown in FIG. 5, the housing 21 further includes a partition plate 25, configured to cover the first wall 213 of the housing 21 to isolate surfaces of the plurality of electrode assemblies 22 from the housing 21.

In an embodiment, as shown in FIG. 5, the first wall 213 of the housing 21 is a smaller-area wall of the housing 21. During the charging, the first electrode assembly 221 and the second electrode assembly 222 expand in volume and squeeze the partition plate 25 that covers the first wall 23, thereby resulting in deformation of the partition plate 25, and in turn, causing deformation of the pressure relief mechanism 23. The smaller the area, the smaller the expansion force received, and the lower the degree of deformation. By disposing the pressure relief mechanism 23 on the smaller-area first wall 213 of the housing 21, this application reduces the deformation of the pressure relief mechanism 23, reduces the risk of fatigue damage of the pressure relief mechanism 23, and improves the safety of the battery cell 20.

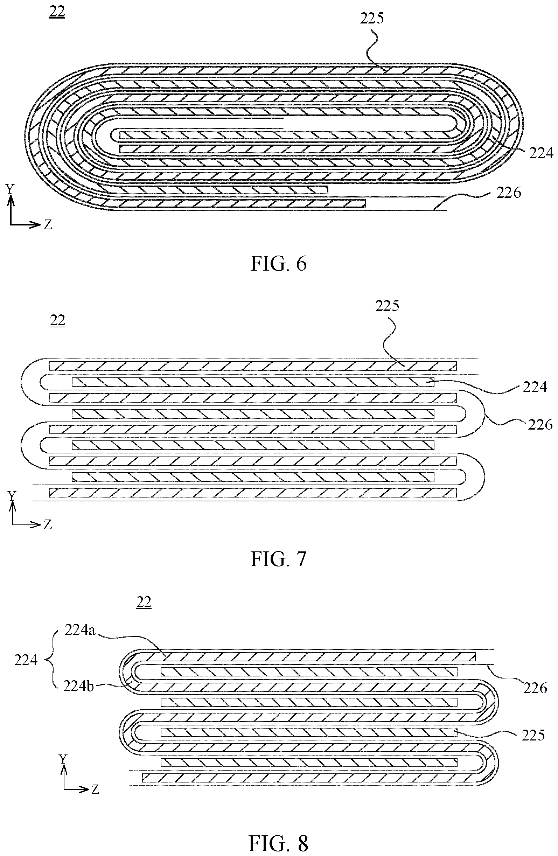

The type of the electrode assembly 22 is not limited in this embodiment of this application. For example, as shown in FIG. 6, the electrode assembly 22 includes a first electrode plate 224 and a second electrode plate 225. The first electrode plate 224 and the second electrode plate 225 are wound around a winding axis. The winding axis is parallel to the length direction X of the battery cell 20. For another example, as shown in FIG. 7, the electrode assembly 22 includes a plurality of first electrode plates 224 and a plurality of second electrode plates 225. The plurality of first electrode plates 224 and the plurality of second electrode plates 225 are stacked alternately along a second direction Y. The second direction Y is perpendicular to the length direction X of the battery cell 20. For another example, as shown in FIG. 8, the electrode assembly 22 includes a first electrode plate 224 and a plurality of second electrode plates 225. The first electrode plate 224 includes a plurality of stacked sections 224a and a plurality of bent sections 224b. Each bent section 224b is configured to connect two adjacent stacked sections 224a. The plurality of second electrode plates 225 and the plurality of stacked sections 224a are stacked alternately along a second direction Y. The second direction Y is perpendicular to the length direction X of the electrode assembly 22.

The winding axis of the first electrode plate 224 and the second electrode plate 225 of the electrode assembly 22 is parallel to the length direction X of the battery cell 20, or the stacking direction of the first electrode plate 224 and the second electrode plate 225 of the electrode assembly 22 is perpendicular to the length direction X of the battery cell. Therefore, most of the gas generated by the electrode assembly 22 is expelled from the end of the first electrode plate in the length direction X and the end of the second electrode plate in the length direction X. A gap for passing the gas is formed between the end of the first electrode plate 224 along the length direction X and the end of the second electrode plate 225 along the length direction X. The pressure relief mechanism 23 is located at a position on the first wall 213, where the position is opposite to the region between the first electrode assembly 221 and the second electrode assembly 222 arranged along the length direction. When the internal pressure of the battery cell 20 exceeds the threshold, the gas can pass through the gap and act on the pressure relief mechanism 23 to actuate the pressure relief mechanism 23, so as to release the internal pressure.

Of the first electrode plate 224 and the second electrode plate 225, one is a positive electrode plate, and the other is a negative electrode plate. FIG. 6 and FIG. 7 show an example in which the second electrode plate 225 is a negative electrode plate, and the first electrode plate 224 is a positive electrode plate. FIG. 8 shows an example in which the second electrode plate 225 is a positive electrode plate, and the first electrode plate 224 is a negative electrode plate. In an embodiment, as shown in FIG. 6 to FIG. 8, the electrode assembly 22 further includes a separator 226 configured to dielectrically isolate the first electrode plate 224 from the second electrode plate 225.

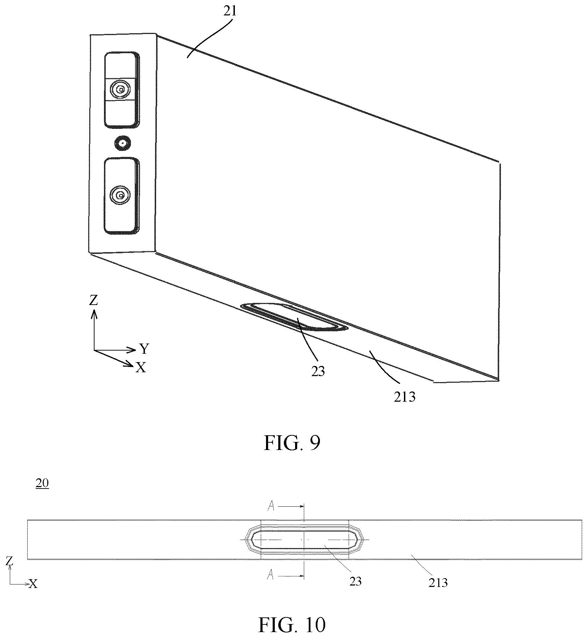

In an embodiment, as shown in FIG. 9, the first wall 213 of the housing 21 is a bottom wall of the housing 21. In other words, the pressure relief mechanism 23 faces downward. In this way, when the battery 10 is mounted under the seat of a vehicle 1, the pressure relief mechanism 23 can be kept away from passengers. Therefore, the internal pressure of the battery cell 20 is released downward, thereby reducing the risk of injury to the passengers.

To further improve the performance of the pressure relief mechanism 23, this application further designs the thicknesses of the pressure relief mechanism 23 and the housing 21. A detailed description is given below with reference to FIG. 10 to FIG. 12.

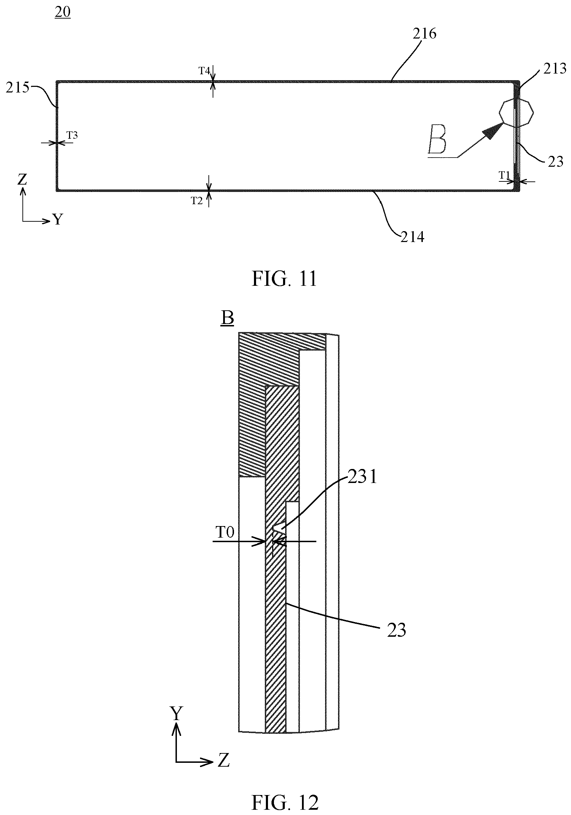

FIG. 10 shows a first wall 213, and a pressure relief mechanism 23 is disposed on the first wall 213. FIG. 11 is a cross-sectional view of the battery cell 20 shown in FIG. 10 and sectioned along an A-A direction. FIG 12 is a close-up view of a local region B in the battery cell 20 shown in FIG. 11.

In an embodiment, the thickness of the first wall 213 of the housing 21 is greater than the thickness of any other wall of the housing 21 other than the first wall 213. For example, as shown in FIG. 11, the thickness of the first wall 213 is greater than the thicknesses of the second wall 214, the third wall 215, and the fourth wall 216 of the housing 21 other than the first wall 213. Among the walls of the housing 21, the first wall 213 on which the pressure relief mechanism 23 is disposed is thicker than other walls of the housing 21 other than the first wall 213. The relatively thick first wall 213 improves the welding reliability of the pressure relief mechanism 23, and makes the first wall 213 not prone to deform. In this way, the pressure relief mechanism 23 is less affected by the creep caused by the internal pressure of the battery cell 20, and in turn, the burst pressure of the pressure relief mechanism 23 is less affected by the creep. Therefore, the pressure relief mechanism 23 can effectively release the internal pressure when the internal pressure is greater than the threshold. In addition, the decrease in the thickness of other walls also reduces the manufacturing cost of the housing 21.

In an embodiment, the thickness of the pressure relief mechanism 23 is less than the thickness of the housing 21. The thickness of the pressure relief mechanism 23 is a thickness at an effective position of the pressure relief mechanism 23. The effective position is a position to be burst open first on the pressure relief mechanism 23. In this way, by setting the thickness of the pressure relief mechanism 23 to be less than the thickness of the housing 21, the pressure relief mechanism 23 can be burst open first when the internal pressure of the battery cell 20 is greater than the threshold, thereby providing an effective pressure relief path.

For example, as shown in FIG. 11 and FIG. 12, the thickness of the first wall 213 of the housing 21 is greater than the thicknesses of other walls of the housing 21 other than the first wall 213, and the thickness of the pressure relief mechanism 23 is less than the thicknesses of other walls of the housing 21 other than the first wall 213. Assuming that the thicknesses of the pressure relief mechanism 23, the first wall 213, the second wall 214, the third wall 215, and the fourth wall 216 are T0, T1, T2, T3, and T4 respectively, the thicknesses of the housing 22 and the pressure relief mechanism 23 satisfy: T0 < T2 = T3 = T4 < T1. Correspondingly, assuming that the maximum pressures bearable by the pressure relief mechanism 23, the first wall 213, the second wall 214, the third wall 215, and the fourth wall 216 are P0, P1, P2, P3, and P4 respectively, the following relationship is satisfied: P0 < P2 = P3 = P4 < P1.

Evidently, when the thicknesses of the housing 22 and the pressure relief mechanism 23 satisfy the above relationship, on the one hand, because the thickness of the pressure relief mechanism 23 is less than the thicknesses of other walls of the housing 21, the pressure relief mechanism 23 can be burst open first when the internal pressure of the battery cell 20 is greater than the threshold, thereby providing an effective pressure relief path. On the other hand, the thicker first wall 213 improves the welding reliability of the pressure relief mechanism 23 on the first wall 213, and makes the first wall 213 not prone to deform. In this way, the pressure relief mechanism 23 is less affected by the creep caused by the internal pressure, and in turn, the burst pressure of the pressure relief mechanism 23 is less affected by the creep. Therefore, the pressure relief mechanism 23 can effectively release the internal pressure when the internal pressure is greater than the threshold. In addition, the decrease in the thickness of other walls also reduces the manufacturing cost of the housing 21.

Here, the thickness of the pressure relief mechanism 23 is a thickness at an effective position of the pressure relief mechanism 23. The effective position is a position to be burst open first on the pressure relief mechanism 23. For example, in an embodiment, as shown in FIG. 12, a nick 231 is created on the pressure relief mechanism 23, and the thickness of the pressure relief mechanism 23 is a residual thickness of the nick 231. When the internal pressure of the battery cell 20 exceeds the threshold, the pressure relief mechanism 23 is burst open first by means of the nick 231. The nick makes the manufacturing process simple, and achieves a good pressure relief effect. In this case, the position of the nick 213 is the effective position of the pressure relief mechanism 23, and the thickness of the pressure relief mechanism 23 is the residual thickness of the nick 213.

The above description is an example in which the battery cell 20 includes the housing 21 and two end caps. In this case, the housing 21 includes four walls. The thickness of the first wall 213 is greater than the thickness of any one of the other three walls. Understandably, when the battery cell 20 includes the housing 21 and one end cap, the housing 21 includes five walls. The thickness of the first wall 213 on which the pressure relief mechanism 23 is disposed may be greater than the thickness of any one of the other four walls.

The form of the pressure relief mechanism 23 is not limited in an embodiment of this application. The pressure relief mechanism 23 may be a component that is relatively independent of the first wall 213. For example, an opening is created on the first wall 213, the pressure relief mechanism 23 covers the opening, and a nick 231 is created on the pressure relief mechanism 23; or, the pressure relief mechanism 23 is a nick 231 formed directly on the first wall 213.

To prevent the assembling process from affecting the pressure relief performance of the pressure relief mechanism 23, in an embodiment, the pressure relief mechanism 23 is recessed in the first wall 213 of the housing 21, that is, buried in the first wall 213, thereby avoiding the impact caused by collision or other factors to the pressure relief mechanism 23 in a process of fitting the pressure relief mechanism 23 to the housing 21.

When the thickness of the pressure relief mechanism 23 is relatively large, the pressure relief mechanism may fail to be burst open first. When the thickness of the pressure relief mechanism 23 is relatively small, the assembling difficulty is increased, and the pressure relief mechanism is prone to be damaged during the assembling. The thickness of the pressure relief mechanism 23 needs to be set by considering the internal pressure of the battery cell 20, and usually needs to match the threshold and enable the pressure relief mechanism to be burst open first when the internal pressure of the battery cell exceeds the threshold. For example, in an embodiment, the thickness T0 of the pressure relief mechanism 23 is greater than or equal to 0.01 mm and less than or equal to 0.5 mm.

A relatively large thickness of the first wall 213 brings additional cost. A relatively small thickness of the first wall makes the burst pressure of the pressure relief mechanism 23 be easily affected by the creep caused by the internal pressure of the battery cell 20. Therefore, the thickness of the first wall needs to set to a value within an appropriate range. For example, in an embodiment, the thickness T1 of the first wall is greater than or equal to 0.2 mm and less than or equal to 3 mm.

A relatively large thickness of other walls of the housing 21 other than the first wall 213 brings additional cost, and a relatively small thickness of other walls of the housing other than the first wall is unable to ensure a sufficient structural stability of the battery cell 20. Therefore, the thickness of other walls also needs to be set to a value in an appropriate range. For example, in an embodiment, the thickness of any other wall of the housing 21 other than the first wall 213 is greater than or equal to 0.2 mm and less than or equal to 1 mm.

In a possible specific implementation of the battery cell 20, the pressure relief mechanism 23 on the battery cell 20 is disposed on the first wall 213 of the housing 21. The first wall 213 is a bottom wall of the housing 21. The pressure relief mechanism 23 is located at a position on the first wall 213, where the position is opposite to a region between two adjacent electrode assemblies 22 arranged along the length direction X of the battery cell 20. A nick 231 is created on the pressure relief mechanism 23. The thickness of the first wall is greater than the thickness of any other wall of the housing other than the first wall, and the residual thickness of the nick 231 is less than the thickness of the housing 21.

As can be learned from the above description, the pressure relief mechanism 23 on the battery cell 20 in an embodiment of this application is disposed on the first wall 213 of the housing 21, and is located at a position on the first wall 213, where the position is opposite to a region between two adjacent electrode assemblies 22. When the internal pressure of the battery cell 20 reaches the threshold, the internal pressure release path formed by the pressure release mechanism 23 is relatively short, thereby facilitating the release of pressure, improving the performance of the pressure release mechanism 23, and improving the safety of the battery cell 20.

Described above are the battery cell 20, battery 10, and electrical device 1 according to some embodiments of this application. The following describes a battery cell 20 manufacturing method and equipment according to some embodiments of this application. For the information not detailed in the following embodiments, reference may be made to the preceding embodiments.

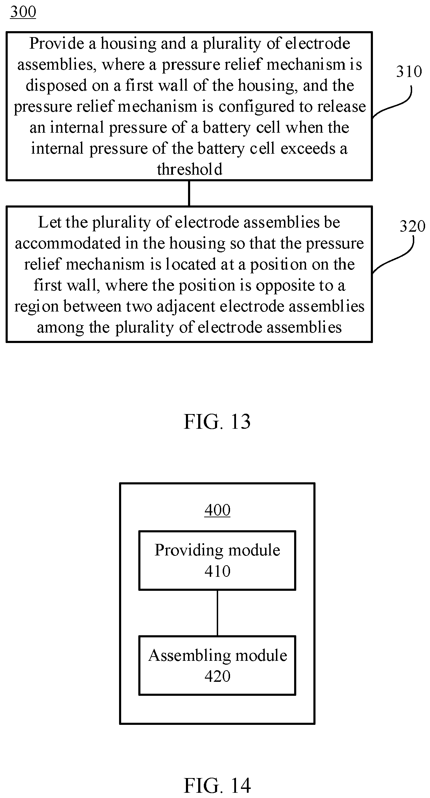

FIG. 13 is a schematic flowchart of a battery cell 20 manufacturing method 300 according to an embodiment of this application. As shown in FIG. 13, the manufacturing method 300 includes: providing a housing 21 and a plurality of electrode assemblies 22, where a pressure relief mechanism 23 is disposed on a first wall 213 of the housing 21, and the pressure relief mechanism 23 is configured to release an internal pressure of the battery cell 20 when the internal pressure of the battery cell 20 exceeds a threshold; and letting the plurality of electrode assemblies 22 be accommodated in the housing 21 so that the pressure relief mechanism 23 is located at a position on the first wall 213, where the position is opposite to a region between two adjacent electrode assemblies 22 among the plurality of electrode assemblies 22.

FIG. 14 is a schematic block diagram of battery cell 20 manufacturing equipment 400 according to an embodiment of this application. As shown in FIG. 14, the equipment 400 includes: a providing module 410, configured to provide a housing 21 and a plurality of electrode assemblies, where a pressure relief mechanism 23 is disposed on a first wall 213 of the housing 21, and the pressure relief mechanism 23 is configured to release an internal pressure of the battery cell 20 when the internal pressure of the battery cell 2020 exceeds a threshold; and an assembling module 420, configured to let the plurality of electrode assemblies 22 be accommodated in the housing 21 so that the pressure relief mechanism 23 is located at a position on the first wall 213, where the position is opposite to a region between two adjacent electrode assemblies 22 among the plurality of electrode assemblies 22.

For the structure of the battery cell 20 manufactured by the manufacturing method 300 and the manufacturing equipment 400, reference may be made to the description of the battery cell 20 provided in each preceding embodiment. For brevity, details are omitted here.

It is hereby noted that to the extent that no conflict occurs, the methods in different embodiments of this application may be combined with each other.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery cell (20), comprising:
a housing (21);
a plurality of electrode assemblies (22), accommodated in the housing (21); and
a pressure relief mechanism (23), disposed on a first wall (213) of the housing (21) and located at a position on the first wall (213), wherein the position is opposite to a middle region between two adjacent electrode assemblies (22) among the plurality of electrode assemblies (22), and the pressure relief mechanism (23) is configured to release an internal pressure of the battery cell (20) when the internal pressure of the battery cell (20) exceeds a threshold.

2. The battery cell (20) according to claim 1, wherein the battery cell (20) is cuboidal, the pressure relief mechanism (23) is located at a position on the first wall (213), and the position is opposite to a region between the two adjacent electrode assemblies (22) arranged along a length direction (X) of the battery cell (20).

3. The battery cell (20) according to claim 2, wherein
each of the electrode assemblies (22) comprises a first electrode plate (224) and a second electrode plate (225), the first electrode plate (224) and the second electrode plate (225) are wound around a winding axis, the winding axis is parallel to the length direction (X) of the battery cell (20); or
each of the electrode assemblies (22) comprises a plurality of first electrode plates (224) and a plurality of second electrode plates (225), the plurality of first electrode plates (224) and the plurality of second electrode plates (225) are stacked alternately along a second direction (Y), and the second direction (Y) is perpendicular to the length direction (X); or
each of the electrode assemblies (22) comprises a first electrode plate (224) and a plurality of second electrode plates (225), the first electrode plate (224) comprises a plurality of stacked sections (224a) and a plurality of bent sections (224b), each bent section (224b) is configured to connect two adjacent stacked sections (224a), the plurality of second electrode plates (225) and the plurality of stacked sections (224a) are stacked alternately along a second direction (Y), and the second direction (Y) is perpendicular to the length direction (X).

4. The battery cell (20) according to any one of claims 1 to 3, wherein two tabs of the electrode assembly (22) are disposed on a first end face (223) of the electrode assembly (22), the first end face (223) is perpendicular to the length direction (X) of the battery cell (20), and, among the two adjacent electrode assemblies (22), a tab of one electrode assembly and a tab of the other electrode assembly are oriented in opposite directions and both oriented outward from the battery cell (20).

5. The battery cell (20) according to any one of claims 1 to 4, wherein the housing (21) comprises a first opening (2211) and a second opening (2212) opposite to each other along the length direction (X) of the battery cell (20), the battery cell (20) further comprises a first end cap (2121) and a second end cap (2122), and the first end cap (2121) and the second end cap (2122) are configured to cover the first opening (2211) and the second opening (2212) respectively.

6. The battery cell (20) according to claim 5, wherein the two adjacent electrode assemblies (22) arranged along the length direction (X) of the battery cell (20) are insulated from each other;
a positive electrode terminal and a negative electrode terminal of the battery cell (20) are disposed on the first end cap (2121), and configured to lead out electrical energy of one electrode assembly (22) among the two adjacent electrode assemblies (22); and
a positive electrode terminal and a negative electrode terminal of the battery cell (20) are disposed on the second end cap (2122), and configured to lead out electrical energy of the other electrode assembly (22) among the two adjacent electrode assemblies (22).

7. The battery cell (20) according to any one of claims 1 to 6, wherein a thickness of the first wall (213) is greater than a thickness of any other wall of the housing (21) other than the first wall (213).

8. The battery cell (20) according to any one of claims 1 to 7, wherein a thickness of the pressure relief mechanism (23) at an effective position of the pressure relief mechanism is less than a thickness of the housing (21), and the effective position is a position to be burst open first on the pressure relief mechanism (23).

9. The battery cell (20) according to claim 8, wherein the thickness of the pressure relief mechanism (23) is greater than or equal to 0.01 mm and less than or equal to 0.5 mm.

10. The battery cell (20) according to claim 8 or 9, wherein a nick (231) is created on the pressure relief mechanism (23), and the thickness of the pressure relief mechanism (23) is a residual thickness of the nick (231).

11. The battery cell (20) according to any one of claims 1 to 10, wherein a thickness of the first wall (213) is greater than or equal to 0.2 mm and less than or equal to 3 mm.

12. The battery cell (20) according to any one of claims 1 to 11, wherein a thickness of any other wall of the housing (21) other than the first wall (213) is greater than or equal to 0.2 mm and less than or equal to 1 mm.

13. The battery cell (20) according to any one of claims 1 to 12, wherein the first wall (213) is a bottom wall of the housing (21).

14. A battery (10), comprising a plurality of battery cells (20) according to any one of claims 1 to 13, wherein the battery cells (20) are configured to provide electrical energy.

15. An electrical device (1), comprising a plurality of battery cells (20) according to any one of claims 1 to 13, wherein the battery cells (20) are configured to provide electrical energy.

16. A battery cell (20) manufacturing method (300), comprising:
providing a housing (21) and a plurality of electrode assemblies (22), wherein a pressure relief mechanism (23) is disposed on a first wall (213) of the housing (21), and the pressure relief mechanism (23) is configured to release an internal pressure of the battery cell (20) when the internal pressure of the battery cell (20) exceeds a threshold; and
letting the plurality of electrode assemblies (22) be accommodated in the housing (21) so that the pressure relief mechanism (23) is located at a position on the first wall (213), wherein the position is opposite to a region between two adjacent electrode assemblies (22) among the plurality of electrode assemblies (22).

17. A piece of battery cell (20) manufacturing equipment (400), comprising:
a providing module (410), configured to provide a housing (21) and a plurality of electrode assemblies (22), wherein a pressure relief mechanism (23) is disposed on a first wall (213) of the housing (21), and the pressure relief mechanism (23) is configured to release an internal pressure of the battery cell (20) when the internal pressure of the battery cell (20) exceeds a threshold; and
an assembling module (420), configured to let the plurality of electrode assemblies (22) be accommodated in the housing (21) so that the pressure relief mechanism (23) is located at a position on the first wall (213), wherein the position is opposite to a region between two adjacent electrode assemblies (22) among the plurality of electrode assemblies (22).
